Europäisches Patentamt

**European Patent Office**

Office européen des brevets

(19)

(11) Publication number: **0 086 246**
A1

(12)

# EUROPEAN PATENT APPLICATION

(21) Application number: **82101135.0**

(22) Date of filing: **16.02.82**

(51) Int. Cl.³: **A 23 L 1/16,** A 21 C 11/22, A 21 C 11/24

(43) Date of publication of application: **24.08.83**
**Bulletin 83/34**

(84) Designated Contracting States: **DE FR IT**

(71) Applicant: **KANEBO FOODS, LTD.,**
**3-12 Motoakasaka 1-chome Minato-ku, Tokyo (JP)**

(72) Inventor: **Murakami, Sanpei, No. 3-10-904,**
**Tomobuchicho 1-chome Miyakojima-ku, Osaka-shi**
**Osaka-fu (JP)**
Inventor: **Kobayashi, Shinsuke, No. 2330, Shin-machi**
**Tano-gun, Gunma-ken (JP)**
Inventor: **Yokoo, Hisahiko, No. 314, Takasagocho**
**Takasaki-shi, Gunma-ken (JP)**
Inventor: **Shimizu, Yoshio, No. 2112, Shin-machi**
**Tano-gun, Gunma-ken (JP)**

(74) Representative: **Lehn, Werner, Dipl.-Ing. et al, Hoffmann,**
**Eitle & Partner Patentanwälte**
**Arabellastrasse 4 (Sternhaus), D-8000 München 81 (DE)**

(54) **Method of manufacturing non-fried instantly cookable dried noodles and apparatus therefor.**

(57) Instantly cookable non-fried dried noodles are manufactured by dividing a large-widthed web 3 of raw noodle material prepared by shaping a starting raw noodle material into a continuous sheet form having a susbstantially uniform thickness into a plurality of moderately-widthed ribbons 7, 7a, 7b, 7c of raw noodle material along a direction of conveyance while the web 3 is being conveyed in its longitudinal direction; successively from the above dividing step, appropriately mutually displacing the resulting adjacently disposed ribbons 7, 7a, 7b, 7c in a direction transversely of their longitudinal direction while the ribbons are being conveyed to thereby establish positional separation of the ribbons from each other, subjecting the ribbons to steaming treatment while conveying them in the state of separation from each other, thereafter cutting the resulting ribbons into individual noodles while being conveyed, and drying the resulting individual noodles while being conveyed. The product dried noodles thus obtained have a uniform quality, improved α-conversion degree, and improved restorability to edible state when immersed in hot water and good sense, feel and taste when eaten.

METHOD OF MANUFACTURING NON-FRIED INSTANTLY COOKABLE

DRIED NOODLES AND APPARATUS THEREFOR


Background of the invention

a)  Field of the invention:

The present invention relates to a method of manufacturing non-fried instantly cookable dried noodles and an apparatus therefor.  More particularly, the present invention pertains to a method of continuously conducting steaming treatment and a drying treatment for a shaped web of raw noodle material in order to manufacture α-converted non-fried instantly cookable dried noodles, and also relates to an apparatus employed in practicing this method.

b)  Description of the prior art:

As a conventional method of producing α-converted non-fried instantly cookable dried noodles without relying on the oil bath type heating and drying process, there has been known the method comprising the steps of: preparing a starting raw material of noodles by adding water to a batch of grain powder consisting mainly of wheat flour and then by mixing them uniformly; subjecting this starting material to rolling or extrusion under pressure to provide a thus-shaped large-widthed web of raw noodle material; thereafter cutting this large web into individual lengthy cord-like individual pieces of raw noodles; and thereafter subjecting these raw noodles to steaming and drying to obtain dried noodles as the final product, or the method comprising the steps of: using the above-mentioned batch of starting raw material of noodles and subjecting this starting mixed material directly to extrusion through a die to provide individual raw noodles; thereafter subjecting these raw noodles to steaming to cause α-conversion of the starch contained therein; and then drying the resulting individual raw noodles to provide product dried noodles. However, these conventional methods have required an additional bending step or crimp-forming step in order to avoid mutual adherence or sticking of the individual raw noodles.

In spite of such additional step, however, there still has inconveniently occurred adherence or sticking of individual raw noodles during the subsequent steaming step. In the worst case, the raw noodles have presented shapes of dumplings as a result of the mutual sticking of these raw noodles. Accordingly, no even and uniform α-convention, through steaming, of the starch thereof could have been brought about in the prior art methods, with the result that the product dried noodles obtained by the prior art methods cannot be restored to satisfactory edible state when immersed in hot water, thereby losing both the sense and flavour when eaten. As an attempt to eliminate these drawbacks of the dried noodles for instant cooking of the prior art, the present inventors earlier proposed, in U.S. Patent No. 4,243,689, a method of manufacturing α-converted non-fried instantly cookable dried noodles comprising the steps of: steaming a shaped raw web of noodle material prepared with component materials consisting mainly of wheat flour and water which is at least 30% by weight of the total weight of the mixed material; then subjecting the steamed large-widthed raw web to preliminary drying to adjust the water content thereof to 15-35% by weight; followed by cutting the resulting web into individual raw noodles; and further drying these individual noodles to provide the final product. According to this latter method, most of the problems of the prior art

0086246

- 4 -

techniques described above are resolved, and a uniform high-degree α-conversion of the starch of the raw noodle material is attained, on the experimental scale, without being accompanied by mutual sticking of the individual noodles. On the other hand, however, various technical problems are still encountered in materializing production on a reasonable commercial scale automatized process permitting the above-mentioned series of manufacturing steps to be carried out continuously. That is, in case a large-widthed raw web of noodle material which is obtained by forming a starting mixed raw noodle material into a continuous sheet shape is subjected to steaming step using steam while being placed on a conveying means such as an endless belt type conveyor, it should be understood that the large-widthed web of raw noodle material, in spite of its swelling due to the steaming action, is limited in its sliding movement owing to reasons such as the static friction generated between this web and the surface of the conveyor means, i.e. the raw material sticks to such surfaces as mentioned. Accordingly, the widthwise swelling, in particular, of this web of raw noodle material, during the course of its being conveyed, is absorbed by the development of bulging which arises longitudinally of the web, causing the formation of a number of longitudianl wrinkles and ridges in the sheet-like web of raw material. These longitudinal wrinkles and ridges which are formed in the web of raw material are fixed, as they are, during the preliminary drying step, bringing about marked inconvenience in cutting the web into individual noodles of a relatively small cross section. As a natural result, these individual raw noodles lack uniformity in the quality of the product noodles so that they are inferior in value as a noodle. Moreover, the currents of steam which act upon the large web of raw noodle material during the steaming step fail to reach the entire surface of the web. Thus, there is noted the tendency that the starch of the raw material in the central part of the large-widthed web is not uniformly α-converted relative to the marginal portions of the web. In order to cope with such inconveniences, the amount of steam which is supplied has to be increased, or the processing time requires to be extended. Thus, the prior — proposed method is still entailed by various inconveniences and disadvantages not only in the manufacturing process but also in designing the manufacturing apparatus.

The present inventors have made extensive studies and researches with the purpose of solving the above-stated problems, and as a result the present invention has been accomplished.

0086246

- 6 -

## Summary of the invention

It is the primary object of the present invention to provide a method of obtaining, advantageously on an industrial basis, α-converted instantly cookable dried noodles having a uniform quality and a superior restorability to edible state when immersed in hot water, and excellent sense and good flavour when eaten.

A second object of the present invention is to provide a manufacturing apparatus used, on commercial basis, for putting the above-mentioned method into practice, designed to manufacture the said dried noodles in a reasonable continuous fashion.

The above-said first object is attained by first preparing a large web of raw noodle material by shaping a batch of raw noodle material into a continuous sheet form of substantially uniform thickness; then, while conveying the large-widthed web in its longitudinal direction, dividing this large web into a plurality of ribbons of a moderate width along the direction of conveyance; then successively thereto and while conveying these adjacently positioned moderately-widthed ribbons of raw noodle material, imparting a distance either vertically or sideways between respective adjacently-aligned ribbons; then conveying the ribbons while maintaining their zig-zag positions, subjecting these ribbons of raw noodle material to steaming; followed by cutting the ribbons into individual noodles; and then drying them.

Also, the second object of the present invention is materialized by providing an apparatus for manufacturing instantly cookable dried noodles mentioned above comprising, in successive order: a shaping unit for shaping from a batch of raw noodle material a continuous lengthy large-widthed web of sheet form having a substantially uniform thickness; a dividing unit having at least one cutting member for dividing the large-widthed web of raw noodle material delivered continuously from said shaping unit along its longitudinal direction into a plurality of ribbons of raw noodle material each having a moderate width; a displacing or separating unit for displacing adjacently disposed ribbons of a moderate width from each other while conveying the adjacently disposed ribbons in their longitudinal direction; a steaming chamber containing, passing through thereof, conveying means for conveying these respective ribbons of the moderate width mounted thereon and also containing therein means for supplying steam; a preliminary drying chamber provided in a stage subsequent to said steaming chamber and having therethrough an endless belt type conveying means and also having therein a means for supplying heated dry air; a secondary drying chamber provided subsequent to said preliminary drying chamber and having therethrough an endless belt type conveying means and also having therein a means for supplying heated dry air; a longitudinal cutting unit provided between said preliminary and secondary drying chambers for cutting said moderately-widthed ribbons of raw noodle into individual noodles along their longitudinal direction; and a crosswise cutting unit provided subsequent to said secondary drying chamber for cutting the individual noodles into an appropriate length.

The raw noodle material herein referred to means a starting material consisting mainly of wheat flour and added, as required, with other grain powder, starch, known noodle quality improving agent, additive, seasoning agent, whole egg, egg yolk, egg white and the like, and prepared by uniformily mixing these components with a predetermined amount of water. This mixed material has a water content which appropriately is about 30-40% by weight, preferably 32-37% by weight, of the total weight of the raw noodle material. The raw noodle material having a water content lesser than the above-mentioned limits will undesirably cause a difficulty in effecting uniform and even spreading of water throughout the noodle composition, resulting in an insufficient formation of gluten, leading to insufficient viscosity and extendability of material which, in turn, will cause easy breaking of the web of raw noodle material, and will cause non-uniform quality of the noodle material in the stage subsequent to the steaming step. On the other hand, in case the water content of the starting mixture exceeds the above-mentioned limits, this is not desirable either because the gluten network of the material becomes softened and weakened, resulting in hampering the shape-holdability and also in an excessive viscosity of the material which, in turn, develops the tendency that the raw noodle material or the web thereof adheres to the surface of the processing units through or over which the material or web passes while being in contact therewith, and that the shape as well as the quality of the product noodles become poor.

The method and apparatus according to the present invention using the above-mentioned raw material of noodle as the starting material will be described in further detail in the following statement by giving reference to the accompanying drawings.

### Brief descripition of the drawings

Fig. 1 is a schematic illustration, partly broken away, showing a concerete embodiment of the apparatus for putting the method of the present invention into practice.

Figs. 2 to Fig. 4 are schematic illustrations showing essential parts of different modifications of the apparatus of the present invention.

Fig. 5 is an illustration showing the relative positions at which the shaped web of raw noodle material is brought into contact with separator roller which is applied to the apparatus of the present invention.

Detailed description of the preferred embodiments

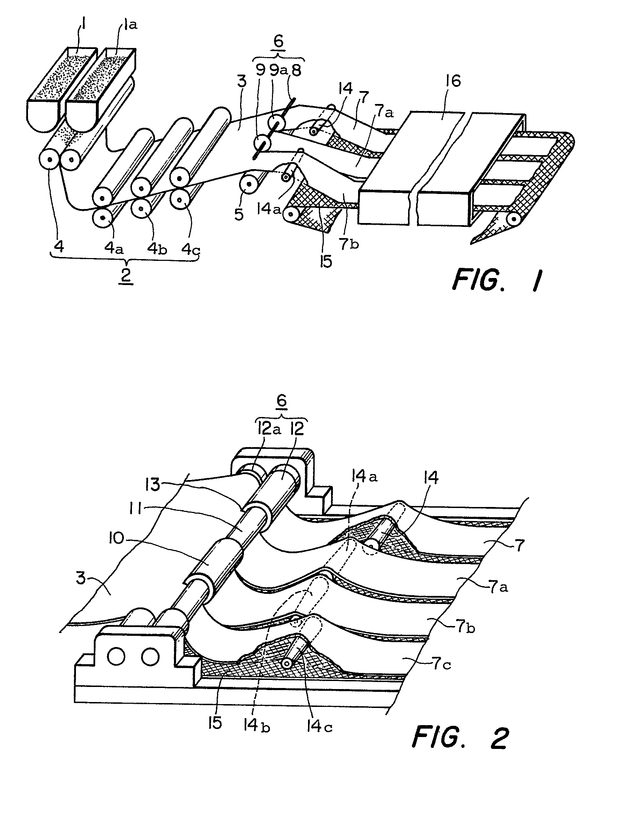

In Fig. 1, the batches of raw noodle material contained in mixers 1 and 1a are supplied to a shaping unit 2 through slits provided in the bottom portions of the respective mixers, where they are shaped into a continuous web form having a substantially uniform thickness, to thereby provide a lengthy web 3 of raw noodle material having a substantially large width. The shaping unit 2 is a so-called rolling mill which is comprised of series-arranged plural pairs 4, 4a, ... of nipping rollers, each pair consiting of two parallel nipping rollers, and also of a driving means (not shown) for causing a greater peripheral velocity of the paired nipping rollers as the pair goes farther away from the mixers. Such shaping unit is known. The large-widthed web of raw noodle material may be so shaped by relying on any other widely employed shaping machine such as a screw extruder in such a way that a batch of raw noodle material is mixed while being slightly kneaded as a matter of course because of the intrinsic function peculiar to the extruder, and extruded into a shape having a C-shaped cross section, thereafter spreading this C-shaped material, followed by rolling the resulting material as required. However, apart from the above, by applying the starting mixture of raw noodle material to the rolling mill or unit of the type described above, this material will be rolled into a web of a relatively coarse texture due to the absence of an excessive kneading, and accordingly the web thus prepared is most desirable because the final product obtained from such web is imparted an excellent restorability to edible state when immersed in hot water.

The width of the large-widthed web 3 of raw noodle material is limited by the working width of the processing machine unit which is employed. Usually, the width is in the range of about 40 to about 100cm. However, the width may be selected at will as required. Also, the thickness of the web of raw noodle material requires to be substantially uniform in order to guarantee a uniform quality and a uniform shape of the final product noodles. The preferred thickness of the web is about 0.3 to 2.0mm, and more preferably it is about 0.5 to 1.5mm. A thickness smaller than that range would give the web the tendency to break easily during the subsequent processing steps. Also, a thickness greater than the above-mentioned range not only would make the smooth displacing operation in the subsequent displacement (separation) step difficult, but also would give rise to the fear that, during the steaming step, there would develop a difference in the

degree of α-conversion of the starch-containing component located between the respective top and bottom surface portions of each ribbon of raw noodle material having a moderate width. Thus, these two kinds of thicknesses which are both beyond the above-mentioned ranges are not desirable and should be avoided.

The large-widthed web 3 of raw noodle material thus prepared is then conveyed continuously in its longitudinal direction by an appropriate feeding means such as driving rollers 5. Concurrently therewith, the large-widthed web 3 is cut along the longitudinal direction of the web 3 by a dividing unit 6 into a plurality of ribbons 7, 7a, ... each having a moderate width.

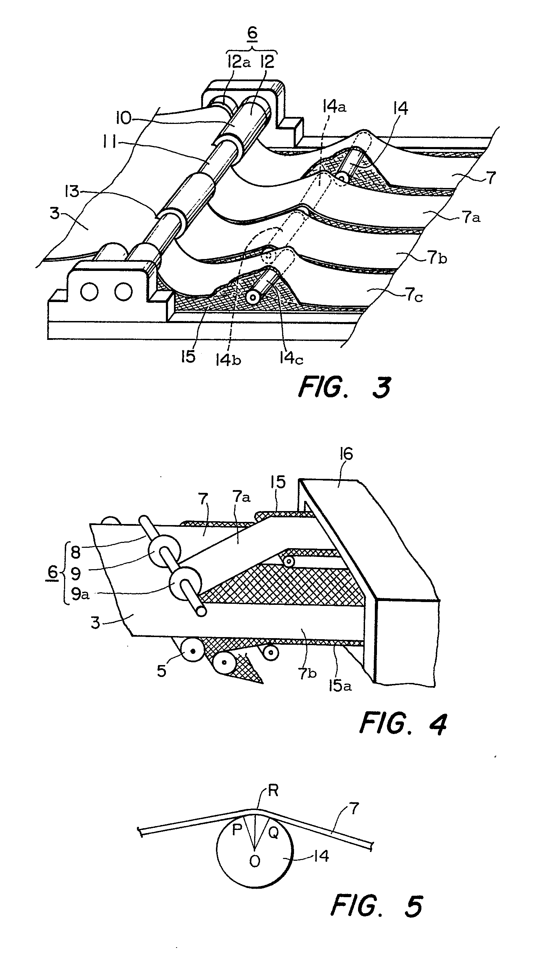

In the embodiment shown in Figs. 1 and 4, the dividing unit 6 is comprised of a rotary shaft 8 which is mounted crosswise, i.e. transversely, at right angle, of the path of the large web 3, above this path, and a cutting unit which is comprised of at least one disc cutter 9 which is vertically fixed on said rotary shaft 8, and this cutting unit is provided with a driving means (not shown) for driving the rotary shaft 8.

Figs. 2 and 3 show modifications of the dividing unit 6. More particularly, two cutter rollers 12 and 12a each being secured rotatably on a shaft and having alternate formations of a large-diameter portion 10 and a small-diameter portion 11 are arranged in parallel so

- 13 -

that the respective large-diameter portions 10 of one of these two cutter rollers fit into the respective small-diameter portions 11 of the other cutter roller to form stepwise nipping edges. The thus-combined cutter rollers 12 and 12a are mounted above the travelling path of the large web of raw noodle material so as to transverse this path at right angle. The dividing unit 6 further comprises a driving means (not shown) for driving the cutter roller 12. This dividing unit 6, thus, is of the type that the large-widthed web 3 of raw noodle material which passes through the stepwise nipping edges are cut apart by the peripheral marginal edges 13 of the two large-diameter portions 10 which are brought into slidable contact with each other. The dividing unit 6 which is applied to the present invention is not limited to these embodiments illustrated herein. It should be understood that various modifications and changes of design may be made, and furthermore the application of any known type of cutting devices is not prohibited.

The cutting members which are provided on the dividing unit 6 desirably are spaced at intervals of every approximately 5 to 30cm, and more preferably at the intervals of about 10 - 20cm. More particularly, these numerical values signify the width of the respective ribbons of raw noodle material having a moderate width by being cut from the large-width web by the dividing unit 6. It should be understood that a smaller width of the ribbons than the above-mentioned range will lead to an increase in the number of those ribbons of raw material having a moderate width, and accordingly will lead to complication of the construction of the displacing unit which will be described later, and furthermore will lead to an increase in the amount of non-uniform sized individual noodles which are produced from the peripheral marginal portions of the respective ribbons of raw noodle material. On the other hand, in case the ribbons of the raw material have a width greater than the above-mentioned ranges, this not only will make the subsequent displacement operation difficult, but also will give rise to problems substantially similar to those which arise in case a large-sized web of raw noodle material is directly processed in the steaming step, i.e. for example, there will be produced longitudinal wrinkles and ridges due to swelling of the material, or there will be generated non-uniform heating in the direction of the width of the web, adversely affecting the quality of the final product.

The ribbons 7, 7a, ... of raw noodle material having a moderate width which have been prepared in the manner as described above are displaced from their mutually adjacent positions as viewed in the direction crossing their lengthwise direction so as to assume different positions relative to each other and to be separated apart from each other. The direction crossing the lengthwise direction of the ribbon of raw noodle material having a moderate width may be vertical or breadthwise. It is only necessary that the adjacent ribbons of raw noodle material having a moderate width be displaced relative to each other so as to be separated from each other at predetermined intervals. Also, the term "displace relative to each other" covers both cases wherein one of the adjacent ribbons is displaced and wherein both of the adjacent ribbons are separated from each other. Furthermore, the term "separated from each other at predetermined intervals" means that the adjacently arranged plural ribbons of raw noodle material are displaced apart from each other at spatial distances which are of relatively variable values for each ribbons. Ribbons of raw noodle material having a moderate width which are in such state of being displaced apart from each other as mentioned above can be effectively steamed in the subsequent steaming step, and thus it is possible to provide a final noodle product having a uniform configuration.

Figs. 2 and 3 show examples of the displacing unit for causing widthwise displacement of the respective ribbons 7, 7a, ... of raw noodle material to thereby displace them apart from each other.

In Fig. 2, those ribbons 7, 7a, ... of raw noodle material having a moderate width which have been so formed by passing through the dividing unit 6 which is comprised of a pair of cutting rollers 12 pass over a plurality of displacing rollers 14, 14a, ... in contact therewith which are mounted in transverse direction across the respective paths of conveyance of these ribbons. These displacing rollers 14, 14a, ... are mounted on their shafts for rotation about the respective shafts. These rollers are tapered rollers which are each formed to have progressively smaller diameters as the portions of the length go farther away outwardly from the center of the total width of the group of ribbons of raw noodle material. Those displacing rollers which are disposed on the distal peripheral positions relative to the center of the longitudinal path of the large web of raw material have greater degree of taper than those rollers positioned closer to the center. Accordingly, the central longitudinal line of the displacement rollers which are contacted by the ribbons of raw material progressively inclines downwardly as this line goes farther outwardly from the center of the total width of the group of ribbons of raw noodle material, or said line progressively inclines backwardly relative to the longitudinal direction of the ribbons of raw noodle material, or inclines progressively downwardly and backwardly as said line goes outwardly from said center. Also, the degree of inclination of the central longitudinal line of the distal displacing rollers is appropriately greater than that of the proximal rollers. Here the central longitudinal line of the displacing roller contacted by a ribbon of raw noodle material means such line of that displacing roller which passes through the center R of an arc PQ with which the ribbon 7 of raw noodle material having a moderate width contacts the displacing roller 14. Hereinafter such central longitudinal line is referred to simply as a "roller axis". As stated above, owing to the provision of inclination to the roller axis of the displacing roller 14, the ribbons 7, 7a, ... of raw noodle material having a moderate width are allowed to slide over the displacing rollers 14, 14a, ... in the widthwise direction, or they are caused to be displaced outwardly by virtue of the rotation of the displacing roller 14, with the result that these ribbons are displaced appropriately apart from each other.

In the displacing unit shown in Fig. 3 there are employed ordinary cylindrical rollers to serve as the displacing rollers 14, 14a, ... in place of the tapered rollers, and they are arranged so that the central axes of the respective displacing rollers 14, 14a, ... are inclined in such a way that the roller axes of these respective rollers present a progressive inclination as in the preceding embodiment, whereby causing displacment of the ribbons of raw noodle material apart from each other.

The embodiments described above show the instances wherein one displacing roller is employed for each ribbon of raw noodle material having a moderate width. It should be understood, however, that, so long as the roller axis forms the abovesaid inclination, many modifications and applications may be made such that a plurality of displacing rollers are arranged in series for a single ribbon of raw noodle material having a moderate width to thereby increase the displacing action, or that the respective displacing rollers are mounted on a same single curved shaft to provide the so-called scroll type arrangement, or that the rotary surface portion of the roller is composed of a flexible material to provide a single "curved surface roller" arrangement.

Thus, the interval between the adjacent separate ribbons of raw noodle material having a moderate width desirably is at least 5% of the sum of the widths of these two adjacent ribbons. More particularly, ribbons of raw noodle material having a moderate width develop swelling during the subsequent steaming step, and will develop a swelling as well as an expansion of the width of several percent, and in extreme cases a swelling and expansion as much as 9.6%, especially widthwise, is observed. Therefore, the abovesaid interval is intended to prevent the occurrence of marginal edges of the respective ribbons coming to contact each other again due to such swelling and expansion. However, a mere excessive interval of displacement or separation ought to be avoided because it could lead to such inconveniences that the texture and the shape of the ribbons of raw noodle material are impaired, and in an extreme case, the marginal portions of ribbons are broken, or that the subsequent processing devices of a large size will have to be provided.

The mutually separated ribbons of raw noodle material having a moderate width are then placed on a conveying unit which is typically represented by, for example, endless belt conveyor. The ribbons are conveyed thereon while keeping their separated or displaced state, to be subjected to a steaming process. However, in order to place the ribbons of raw material on the conveying unit while maintaining a predetermined separated or displaced state, it is needless to say appropriate to adjust the degree of inclination of the roller axes of the respective displacing rollers in the above-mentioned displacing unit, but also it is desired to appropriately set the disposition relationships, such as the distance of free travelling zone of ribbons not supported by the conveyor between the displacing rollers and the ribbons of raw noodle material, and the distance between the horizontal levels of said rollers and the conveying unit. Such degree of inclination of the roller axes as well as said positional relationship between the displacing rollers and the conveying unit can be appropriately determined experimentally so as to comply with such factors as the width, thickness and travel velocity of the ribbons of raw noodle material having a moderate width.

Next, Fig. 4 shows an embodiment of the displacing unit for alternately displacing the ribbons of raw material vertically relative each other to thereby establish displacement of the ribbons relative to each other. In the displacing unit of the type shown in Fig. 4, there are arranged conveying means in upper and lower two stages. In place of the provision of means assigned to cause widthwise displacement of the ribbons of raw material as in the preceding embodiment, there have to be provided endless belt type conveyor means or roller type conveyor means in two stages vertically. Thus, there is the disadvantage that the scale of the whole apparatus increases as compared with the apparatus equipped with the displacing unit of the preceding embodiment.

As another method of displacing ribbons of raw material apart from each other, there is the method designed so that the large web of raw material is cut in the dividing unit of the preceding stage into alternate arrangement of ribbons having a moderate width and a smaller width, respectively, which are positioned side by side, and that then the ribbons of smaller width are removed. Such method cannot be termed necessarily advantageous, though depending on cases, because the yield of product would be lowered.

The conveying unit which, for example, is an endless belt type conveyor unit 15, for conveying those divided and mutually displaced ribbons of moderate width while being placed on this unit in their mutually displaced state, is provided through a steaming chamber 16 as shown in Fig. 1. This steaming chamber 16 is further provided therein with steam ejecting nozzles (not shown) which are connected to steam supply piping. As the endless belt type conveyor unit 15, the employment of such type that the endless belt allows the passage of steam therethrough, e.g. net conveyor, is most suitable. Also, the longitudinal length of the steaming chamber 16 desirably is designed so as to allow the passage therethrough of the ribbons of raw noodle material within the length of time of stay therein of 2 to 5 minutes. It is easy for those skilled in the art to determine the shape, size, number and arrangement of the steam-ejecting nozzles to assure that steam is ejected to fill the interior of the steaming chamber 16 with as much uniform distribution as possible. It is, however, important to pay special consideration so that the supplied steam will not be ejected to directly hit the ribbons of raw material and that substantially saturated steam is supplied into the chamber. The ribbons of raw noodle material having a moderate width which are now aligned in parallel on the conveyor belt at predetermined intervals between adjacent ribbons are conveyed continuously into the steaming chamber 16 with their displaced state being maintained, in accordance with the run of the conveying unit 15. After the ribbons are subjected to the steaming process, they are conveyed to the outside of the steaming region. During the steaming process, steam is allowed to flow freely in the space defined between the mutually displaced ribbons of raw noodle material having a moderate width. Accordingly, there is always formed within the steaming chamber 16 a steam atmosphere always having a substantially uniform temperature distribution. Thus, respective ribbons of raw noodle material receive uniform steaming treatment throughout the entire widths of both the upper and lower surface thereof. Also, ribbons of raw material having a moderate width, even though they may swell by virtue of the steaming treatment, is such that the absolute value of widthwise elongation is small due to their having a moderate width. Furthermore, due to the resulting reduction of the weight per ribbon, the friction force of the ribbon against the surface of the conveying belt is reduced also. Therefore, the ribbons of raw noodle material having a moderate width is easy to slide and advance on the conveying means. As a consequence, the possibility of occurrence of deformation of ribbons due to the generation of ridges and wrinkles reduces remarkably. In addition, by selecting the intervals between adjacent ribbons of raw material having a moderate width at an appropriate value, it should be understood that, even when these ribbons of raw material develop swelling and widthwise expansion, the intervals between the adjacent ribbons remain not blocked, and thus uniform steaming treatment is not hampered.

The condition suitable for the steaming treatment is to expose the ribbons of raw material to a substantially saturated steam at a gauge pressure of about 0.5 - 1.5kg/cm$^2$, more preferably about 0.7 - 1.2kg/cm$^2$, for about 2 to 5 minutes. Under such condition, the ribbons of raw noodle material are heated and swollen uniformly, and the starch contained in the components of these ribbons is α-converted uniformly and sufficiently. Thus, there are obtained processed ribbons of noodle material having a moderate width and having a uniform good configuration. In such instance, the α-conversion degree shows a high value of at least 85%, and normally 90% or more, which guarantees uniform good restorability to edible state of the obtained product when immersed in hot water as well as excellent sense and flavour when eaten.

A uniform application of an appropriate amount of water onto the entire surfaces of ribbons of raw noodle material having a moderate width prior to said steaming treatment is desirable in making effective carrying-out of said steaming treatment and further promoting uniform α-conversion of the starch contained in the components. The amount of water which is applied to the ribbons as stated above, appropriately, is 100% by weight at most, relative to the weight of ribbons of raw material. An amount greater than that level requires one's attention because of the occurrence of uneven α-conversion of the starch due to excessive swelling of the ribbons of raw material, and furthermore because of the tendency that troubles such as uneven drying occurs easily during the subsequent drying step. Also, as for the means of applying water to the ribbons of raw material, there are, for example, the method using a spraying device such as atomizer, damper and sprayer, and the method for passing the ribbons through a bath of water. Among them, the method of applying water by a spraying device is most suitable. Such spraying device desirably is provided between the displacing unit and the entrance of the steaming chamber. Furthermore, the application of aqueous emulsion of edible oil in place of water as proposed in U.S. Patent No. 4,098,906 may be adapted to the method of the present invention.

The processed ribbons of raw noodle material having a moderate width after being subjected to steaming treatment which are obtained according to the present invention are continuously conveyed by conveying unit into the preliminary drying chamber while maintaining the mutually separated state, where the ribbons are given a preliminary drying for about 1 to 5 minutes at a temperature of 110°C at the highest, preferably at 80 - 100°C. Thereafter, the resulting ribbons are cut along the longitudinal length thereof by an appropriate cutting means such as known cutting blades designed for noodles or slit cutters to provide individual noodles usually having a width of about 10mm or smaller. Then, the resulting individual noodles are conveyed into a secondary drying chamber to be dried for 2 to 30 minutes at a temperature of usually about 55 to 160°C.

The step of cutting the individual noodles into a desired length may be carried out either before or after the secondary drying step. In general, however, it is often the case that the secondary drying step adopts the drying by heated air blowing. In such case, this cutting step desirably is carried out following the secondary drying step from the viewpoint of preventing the scattering of noodle chips caused by the heated air blowing. As stated, the steamed ribbons of raw noodle material are processed while maintaining the configuration of such ribbons and the displaced positions of ribbons throughout both the preliminary drying step and the secondary drying step. Therefore, it will be understood that, in each of these drying chambers, the flow of the heating medium such as heated air can be accomplished smoothly, and thus there is obtained a generally uniform and even temperature distribution when viewed as a whole system. Accordingly, a very effective drying can be carried out.

In the preliminary drying step, it is desirable that the moisture content of the ribbons of raw material be adjusted to be 15 - 35% by weight of the total weight of the ribbons. A water content less than this range could result in scorching of the material. Not only that, the texture of the noodle material will become fragile, causing rupture or breaking when the ribbons are cut into individual pieces of noodles, with the result that it becomes difficult to obtain uniform configuration of product noodles. On the other hand, in case of insufficient drying, the noodle material would easily stick to the cutter blades at the time when individual noodles are cut out from the ribbons. In addition, there will develop sticking between individual noodles, which, in turn, will cause insufficient drying and swelling of these sticking portions. Thus, there will arise the drawback that the final product noodles will become uneven in quality. Thus, good care has to be paid to the temperature in each of the two-stage drying steps. In the secondary drying step, the moisture content of the raw noodles is reduced, usually, to a level of about 10% or less by weight. It should be noted that especially when drying in the secondary drying step is conducted at a high temperature of 115°C or higher, the individual noodles can be swollen and the restorability of the product noodles to edible state when immersed in hot water can be improved.

As described above, the method of the present invention adroitly combines the step of dividing a large-widthed raw web of noodle material having an appropriate shape and size into ribbons of raw noodle material having an appropriate moderate width, while being caused to travel continuously in the longitudinal direction of the large-widthed web; the step of displacing the adjacently disposed ribbons of moderate width from each other in such state that they are set more or less free because they are not supported for a given distance; and the step of subjecting these ribbons of material to a steaming step while conveying the ribbons in their mutually displaced state. Thanks to this combination of these steps, the deformation of a large-widthed web which would arise due to swelling of such large-widthed web of raw noodle material when it is directly subjected to a steaming treatment can be minimized. Furthermore, this steaming step and the subsequent drying step can be efficiently and uniformly carried out. Thus, the combined steps make it possible to obtain product noodles having an even configuration and quality and having an excellent restorability to edible state when immersed in hot water, as well as good sense and flavour when eaten. Also, according to the apparatus of the present invention, it is possible to accomplish steaming or drying in a relatively short period of time by supplying an appropriate but small amount of steam or heating medium for drying. Therefore, the apparatus is prevented from becoming large in size, and it is possible to provide a reasonably designed continuous production apparatus having a very high value of commercial utility at a reduced installation cost and area. As stated, the apparatus of the present invention exhibits many excellent advantages which could not be found in the apparatuses of the prior art.

The present invention will hereunder be described more concretely based on some examples and experiments made.

It should be noted that in the following examples, the term "part" or "parts" indicates part or parts by weight, and the symbol "%" signifies percent by weight.

Evaluation of the properties of the respective ribbons of raw noodle material in the respective manufactuing steps according to the present invention and the manner of such evaluation are as described below.

(1) Manufacturing operability

During the course of manufacture of instantly cookable dried noodles, the instance where no trouble occurred in each manufacturing step is marked "good". The instance where some troubles took place but the product noodles were not affected is marked "fairly good". The instance where some troubles developed, somewhat affecting the product noodles is marked "slightly poor". The instance wherein troubles occurred and adversely affecting the product noodles is marked "poor". The instance wherein the manufacture was not possible is marked "impossible".

(2)   Number of ridges formed in the surface of ribbons of raw noodle material

In the sample ribbons of raw noodle material having experienced a steaming treatment, specimens of 5 x 5cm in size were taken at 10 arbitrary portions thereof, and among the ridges developing on the surfaces of the specimens, those of 2mm or more in both width and height and of 2cm or longer in length were grossly counted, and the number of such ridges is shown in numerical figure (decimals of over 0.5 inclusive are raised to the next higher number and the rest are ignored).

(3)   Rating of blister-like bubble formation in the surfaces of ribbon

Specimens of 3cm square were taken from respective sample ribbons, and gross counting was made of the blisters of 1mm or greater in diameter of the blisters developing in the surfaces of the specimens, and their average number is indicated (decimals of over 0.5 inclusive are raised to the next higher number and the rest are ignored).

(4)   Rating of uneven widths of product dried noodles

The sample individual noodles having experienced the secondary drying step were cut to a length of about 4cm.   From these instantly cookable noodle pieces, specimens each having a weight of 20g were taken.   The number of specimens whose widths varying 10% or greater was counted, and the proportion of such specimens to the total number of specimens is indicated in percent (decimals of over 0.5 inclusive are raised to the next higher number and the rest are ignored).

(5)   $\alpha$-conversion degree of product dried noodles

Specimens were prepared by pulverizing the product noodles to such extent as would pass through a sieve of 100 mesh.   In the measurement, 5 conical flasks of 100ml each were used for each specimen.   These flasks were referred to as $A_1$-$A_4$ and B.   Each specimen was measured for 1.00g and the measured specimens were placed in the conical flasks $A_1$-$A_4$, respectively.   However, the tolerance of the weighed amounts in the four flasks was made to be within $\pm$ 5%.

50ml of water was added to each of the five conical flasks and among them, $A_1$ and $A_2$ were heated and boiled for 15 minutes, and then quenched to room temperature in ice water. Then, to respective flasks $A_1$, $A_3$ and B was added 5ml of 5% aqueous diastase solution. Furthermore, all these 5 flasks were kept at 37°C ± 1°C for 90 minutes while shaking in a thermostat-containing water, after which 2ml of 1 N HCl was added to all the flasks to stop the diastase reaction, and the content in each flask was transferred into a 100ml flask and water was added thereto to set the content at 100ml.

Each solution was filtered, and from the filtrates obtained from the flasks $A_1$-$A_4$ and B, 10ml each of filtrate was fed into a conical flask with a ground stopper by a pipette, and said filtrates were referred to as $a_1$-$a_4$ and b.

In this stage, a conical flask with ground stopper containing 10ml of distilled water was prepared separately for a blank test. 18ml of N/10 aqueous solution of iodine was added to each of a total of 6 flasks. Then, 18ml of N/10 aqueous solution of sodium hydroxide was added to each of the 6 flasks, and these flasks were corked and shaken, and then they were left to stand precisely for 15 minutes. At the end of 15 minutes for each flask, 2ml of 10% sulfuric acid was added to each flask quickly after the stopper was opened. These respective batches of solutions were titrated with N/10 aqueous solution of sodium thiosulfate. The resulting titrated values of $a_1$-$a_4$ and b were referred to as

$p_1$-$p_4$ and q, and the titrated value of the blank test was referred to as r. On the basis of the above, $\alpha$-conversion degree (%) was determined by the following formula:

$$\alpha\text{-conversion degree(\%)} = \frac{(r-p_3)-(r-p_4)-(r-q)}{(r-p_1)-(r-p_2)-(r-q)} \times 100.$$

(6) Evaluation of sense, feel and taste of product noodles when eaten

50g of product dry noodles were placed in a cup made of foamed polystyrene, followed by pouring therein 400cc of hot water at 90°C, leaving the cup to stand for 3 minutes. At the end of 3 minutes, the noodles thus cooked were evaluated as they were eaten by a panel of 20 persons. The evaluation of sense, feel and taste when eaten was conducted by the evaluation points method by the persons of the respective panels. Very good was indicated by 10 points, good by 8 points, normal by 6 points, poor by 4 points, and very poor by 2 points. These points were shown by the mean values given by the 20 persons in the panel (decimals of over 0.5 inclusive were raised to the next higher number and the rest were ignored). The evaluation when eaten were carried out with respect to such as "stick to teeth", "shortage of elasticity" and "shortage of smoothness", and the result of evaluation was shown by the number of persons who obtained their sense and so on personally.

(7)  Collective evaluation

By judging such items as manufacturing operability, external appearance, dimensions and the result of sense, feel and taste of product noodles, collective evaluation was made by 5 persons including the inventors.  The collective evaluation was expressed in such manner that: very good was indicated by 10 points, good by 8 points, normal by 6 points, poor by 4 points and very poor by 2 points, and these values were indicated by the mean values given by the 5 persons including the inventors.


Example 1

To 500 parts of wheat flour was added a solution of a mixture consisting of 175 parts of water, 17.5 parts of sodium chloride, 25 parts of egg yolk and 1 part of "Kansui" powder, while mixing them with stirring, and thus a uniform starting raw noodle material was prepared. This starting material was then passed through a rolling machine having 6 pairs of nip-rollers arranged in series to provide a long continuous large-widthed web of raw noodle material having a width of about 60cm and a uniform thickness of 0.7mm.  While conveying this web in its longitudinal direction, the travelling web was cut apart in the direction of its conveyance by roller type cutters having cutter blade portions provided at every

15cm interval, into 4 ribbons of raw noodle material having
a moderate width of 15cm, respectively. In the stage
subsequent to the roller type cutters were arranged 4
displacing rollers each having a cylindrical shape, which
displacing rollers being disposed in a row transversed
at right angles, the travelling path of the ribbons
of material. These displacing rollers were respectively
rotatably arranged in such fashion as to progressively
downwardly incline beginning at the central transverse
line, serving as the so-called watershed line, of the
totalled widths of the group of moderately-widthed
ribbons toward both marginal edges of the totalled widths.
The angles of the downward inclinations of the respective
rollers were selected so that the angle of the proximal
rollers was 3 degrees, and that of the distal rollers
was 6 degrees. The respective moderately-widthed ribbons
of raw material mounted on their mating displacing rollers
slidably advanced thereon in accordance with the progressively
downwardly inclining angles of the rollers to be displaced
progressively outwardly from the said watershed line,
and thus they were separated away from each other. In
this state, the respective ribbons gently descended onto
the net conveyor. While keeping the separation distance
of 18mm between respective adjacent ribbons, the latter
were conveyed to the subsequent stage.

At the positions of the respective ribbons just exiting out from the displacing rollers.  Water was sprayed onto each ribbon by a spray means to deposit thereonto an amount of water equivalent to about 30% by weight of the weight of the ribbon of raw material. In accordance with the run of the net conveyor, the respective moderately-widthed ribbons passed through a steaming chamber, requiring about 3 minutes.  During the period in which the ribbons were in said chamber, they were subjected to a steaming treatment with a saturated steam of a gauge pressure of about $1kg/cm^2$.  Due to this steaming, the moderately-widthed ribbons of raw noodle material developed swelling, expanding by about 9% (13-14mm) in width between adjacent ribbons, respectively. However, these ribbons were still in their mutually separated state, with very few development of lengthwise ridges and wrinkles.  Thus, the ribbons each preserved a neat configuration.

Successively thereto, the thus-treated ribbons of material continuously passed through a preliminary drying chamber where they were given a preliminary drying for about 3 minutes by a heated current of air at a flow velocity of 5m/sec. and at a temperature of 90°C.  The water content of the respective ribbons which have experienced the preliminary drying was noted to be 25%.  The resulting ribbons were then cut in the lengthwise direction thereof by roller type No. 4 cutters into individual noodles having a width of 7.5mm. Thereafter, the individual noodles continuously passed through a secondary drying chamber, requiring about 20 minutes. During this passage, the individual noodles were dried by a heated current of air at a flow velocity of 10m/sec. and at 100°C. Thereafter, the individual continuous noodles were cut into a length of about 4cm, respectively, to provide the final product of instantly cookable dried noodles. The product noodles were noted to have a water content of 8% and an α-conversion degree of 97.3%, and they were restored to a perfect edible state in 3 minutes when immersed in hot water at 90°C.

Example 2

Product dried noodles were obtained by a manufacturing process which was same as that used for Example 1 excepting that, in place of the 4 displacing rollers employed in Example 1, there were used 4 cylindrical displacing rollers which inclined backwardly relative to the lengthwise direction of the ribbons of raw noodle material in such fashion that the two proximal rollers were arranged symmetrically at an included angle of 83 degrees, respectively, relative to a vertical plane passing through the center line of the totalled widths of the abovesaid ribbons of moderate width, and also that the two distal rollers were likewise positioned at an included angle of 80 degrees.


Example 3

Product dried noodles were obtained by a manufacturing process which was same as that used for Example 1 excepting that the four displacing rollers were arranged symmetrically so that the two proximal rollers each was inclined at an included angle of 88 degrees relative to a vertical plane passing through the center line of the totalled widths of said moderately-widthed ribbons and also that concurrently these two rollers were each inclined downwardly at an angle of 8 degrees relative to a horizontal plane. Also, the distal two rollers were arranged symmetrically so that they were each inclined at an included angle of 85 degrees and also inclined downwardly at an angle of 9 degrees.


Example 4

Product dried noodles were obtained by a manufacturing process which was same as that used for Example 1 excepting that the displacing unit did not employ the four displacing rollers, but, as shown in Fig. 4, an auxiliary net conveyor was provided above the principal net conveyor which passed through the steaming chamber so as to convey the moderately-widthed ribbons of raw noodle material shaped by the dividing unit alternately by said principal net conveyor and by said auxiliary net conveyor to displace or separate the ribbons vertically.

Example 5

Product dried noodles were obtained through a manufacturing process similar to that of Example 1, excepting that water was not sprayed to the web of raw noodle material after the passage of this web through the displacing rollers.

Control Example 1

Product dried noodles were obtained by a manufacturing process similar to that for Example 1, excepting that a large-widthed web of raw noodle material so shaped by a rolling machine was subjected, as it was, to subsequent manufacturing steps without passing the web through the dividing unit nor through the displacing unit.

Control Example 2

A large-widthed web of raw noodle material so shaped by a rolling machine was directly cut into individual raw noodles each having a width of 7.5mm by the use of No. 4 roller-type cutters, and that the individual noodles were subjected to a waving treatment to provide wavy noodles, and then under the same conditions as for Example 1, they were given a steaming treatment, followed by drying them under the same condition as that of the secondary drying step of Example 1, to provide product dried noodles.


Control Example 3

Product dried noodles were obtained by a manufacturing process similar to that for Control Example 2, excepting that the individual raw noodles were not subjected to the waving treatment.


Control Example 4

The raw noodle material of Example 1 was extruded by an extruder directly through its die having 30 orifices each having a length of 7.5mm and a width of 0.6mm to provide raw individual noodles, and under the conditions same as those for Example 1, they were given a steaming treatment and a secondary drying treatment, and thus product dried noodles were obtained.

The properties and the sense, feel and taste of the product noodles obtained in Examples 1 to 5 according to the method of the present invention and in Control Examples 1 to 4 are indicated in the following Table 1.

Table 1

| | | Examples | | | | | Control | | | |
|---|---|---|---|---|---|---|---|---|---|---|
| | | 1 | 2 | 3 | 4 | 5 | 1 | 2 | 3 | 4 |
| Mfg. operability | | Good | Good | Good | Good | Good | Fairly good | Poor | Poor | Poor |
| No. of ridges in surface of sheet of raw noodle material | pcs | 0 | 0 | 0 | 0 | 0 | 6 | 0 | 0 | 0 |
| Uneven width of dried noodles | % | 0 | 0 | 0 | 0 | 0 | 9 | 0 | 0 | 0 |
| α-conversion degree of dried noodles | % | 97.3 | 97.2 | 97.0 | 97.2 | 87.3 | 96.5 | 93.3 | 93.5 | 92.8 |
| **Evaluation when eaten** | | | | | | | | | | |
| Stick to teeth | person | 0 | 0 | 0 | 0 | 1 | 0 | 2 | 12 | 4 |
| Short of resiliency | " | 0 | 0 | 0 | 0 | 0 | 0 | 3 | 6 | 0 |
| Excessively resilient | " | 0 | 0 | 0 | 0 | 0 | 0 | 0 | 0 | 12 |
| Short of smoothness | " | 0 | 0 | 0 | 0 | 1 | 0 | 1 | 3 | 7 |
| Excessively smooth | " | 0 | 0 | 0 | 0 | 0 | 0 | 0 | 0 | 1 |
| Mean evaluation points | points | 10 | 10 | 10 | 10 | 8 | 9 | 6 | 4 | 5 |
| Collective evaluation points | points | 10 | 10 | 10 | 10 | 8 | 7 | 5 | 3 | 4 |

As will be clear from Table 1, Examples 1 to 5 are superior to Controls 1 to 4 with respect to the manufacturing operability and quality of product dried noodles, and further to the sense, feel and taste when eaten.

- 41 -

Example 6

The manufacture was conducted in a manner similar to that for Example 1, excepting that in Example 1 the water content of the web of raw noodle material was varied in many ways. The result thus obtained is shown in Table 2.

Table 2

| | | Water content of raw web (%) | | | | | | |
|---|---|---|---|---|---|---|---|---|
| | | 25 | 30 | 32 | 35 | 37 | 40 | 45 |
| Mfg. operability | | Poor | Good | Good | Good | Good | Good | Impossible |
| No. of blisters in surface of raw web of noodle material | pcs | 41 | 2 | 1 | 0 | 0 | 0 | - |
| $\alpha$-conversion degree of dried noodles | % | 88.3 | 94.1 | 95.4 | 97.1 | 97.2 | 97.5 | - |
| Evaluation when eaten | | | | | | | | |
| Stick to teeth | person | 11 | 4 | 0 | 0 | 0 | 0 | - |
| Short of resiliency | " | 9 | 2 | 0 | 0 | 0 | 0 | - |
| Excessively resilient | " | 0 | 0 | 0 | 0 | 0 | 1 | - |
| Short of smoothness | " | 7 | 1 | 0 | 0 | 0 | 0 | - |
| Excessively smooth | " | 0 | 0 | 0 | 0 | 0 | 1 | - |
| Mean evaluation points | points | 4 | 7 | 9 | 10 | 9 | 8 | - |
| Collective evaluation points | points | 3 | 8 | 10 | 10 | 10 | 8 | 4 |

As will be clear from Table 2, the water content of the raw web of noodle material preferably is 30 - 40% by weight, and more preferably 32 - 37% by weight.

Example 7

The manufacture was conducted in a manner similar to that for Example 1, excepting that in Example 1 the thickness of the moderately-widthed ribbons of raw noodle material was varied in many ways. The result thus obtained is shown in Table 3.

Table 3

| | | | | | Thickness (mm) | | |
|---|---|---|---|---|---|---|---|
| | | 0.2 | 0.3 | 0.5 | 1.0 | 1.5 | 2.0 | 2.5 |
| Mfg. operability | | Poor | Good | Good | Good | Good | Good | Fairly poor |
| No. of ridges in surface of sheet of raw noodle material | pcs | 6 | 2 | 1 | 0 | 0 | 0 | 0 |
| α-conversion degree of dried noodles | % | 96.8 | 95.8 | 94.6 | 93.3 | 89.1 | 86.3 | 71.4 |

**Evaluation when eaten**

| | | 0.2 | 0.3 | 0.5 | 1.0 | 1.5 | 2.0 | 2.5 |
|---|---|---|---|---|---|---|---|---|
| Stick to teeth | person | 8 | 4 | 1 | 0 | 0 | 1 | 8 |
| Short of resiliency | " | 0 | 0 | 0 | 0 | 0 | 0 | 0 |
| Excessively resilient | " | 0 | 0 | 0 | 0 | 0 | 2 | 4 |
| Short of smoothness | " | 0 | 0 | 0 | 0 | 1 | 3 | 11 |
| Excessively smooth | " | 13 | 2 | 1 | 0 | 0 | 0 | 0 |
| Mean evaluation points | points | 6 | 7 | 9 | 10 | 9 | 8 | 3 |

| | | 0.2 | 0.3 | 0.5 | 1.0 | 1.5 | 2.0 | 2.5 |
|---|---|---|---|---|---|---|---|---|
| Collective evaluation points | points | 5 | 8 | 9 | 10 | 9 | 7 | 4 |

As will be apparent from Table 3, the thickness of the moderately-widthed ribbons of raw noodle material preferably is 0.3 - 2.0mm, and more preferably 0.5 - 1.5mm.

Example 8

In Example 1, the large-widthed web of raw noodle material was divided into moderately-widthed ribbons so that each has a same width as mentioned in Table 4. These respective ribbons were displaced of their mutual positions so that they were separated from each other at an interval equivalent to 6% of the totalled widths of adjacent two ribbons. Other than that mentioned above, the manufacture was carried out in a manner similar to that for Example 1. The result thus obtained is shown in Table 4.

— 45 —

Table 4

| | | 3 | 5 | 10 | 15 | 20 | 30 | 40 |
|---|---|---|---|---|---|---|---|---|
| | | | Width of moderately-widthed ribbons of raw noodle material(cm) | | | | | |
| Mfg. operability | | Poor | Fairly good | Good | Good | Good | Good | Fairly good |
| Ratio in thicknesses between ribbons | % | 32 | 18 | 3 | 0 | 5 | 11 | 20 |
| No. of ridges in surface of sheet of raw noodle material | pcs | 0 | 0 | 0 | 0 | 0 | 2 | 4 |
| Uneven width of dried noodles | % | 0 | 0 | 0 | 0 | 0 | 6 | 8 |
| Evaluation when eaten | | | | | | | | |
| Stick to teeth | person | 0 | 0 | 0 | 0 | 0 | 0 | 1 |
| Short of resiliency | " | 0 | 0 | 0 | 0 | 1 | 1 | 2 |
| Excessively resilient | " | 4 | 2 | 1 | 0 | 0 | 0 | 0 |
| Short of smoothness | " | 0 | 0 | 0 | 0 | 0 | 3 | 4 |
| Excessively smooth | " | 3 | 1 | 0 | 0 | 0 | 0 | 0 |
| Mean evaluation points | points | 5 | 8 | 9 | 10 | 9 | 7 | 5 |
| Collective evaluation points | points | 5 | 7 | 9 | 10 | 9 | 8 | 6 |

Notes:  In case the moderately widthed raw noodle material had a width larger  than 30cm, two ribbons having a same width were prepared, and the manufacture was conducted.  When the ribbons were displaced and separated

from each other in transverse direction, the thicknesses of the proximally positioned ribbons and of the distally positioned ribbons were compared.  The difference between these two kinds of thicknesses is shown in percent in Table 4.

As will be clear from Table 4, the width of moderately-widthed ribbons of raw noodle material preferably is 5 - 30cm, and more preferably 10 - 20cm.

0086246

- 47 -

What is claimed is:

1. A method of manufacturing instantly cookable non-fried dried noodles, characterized by the steps of:

dividing a large-widthed web of raw noodle material obtained by shaping a starting raw noodle material into a continuous sheet form having a substantially uniform thickness into a plurality of moderately-widthed ribbons of raw noodle material along a direction of conveyance while said web is being conveyed in its longitudinal direction;

successively from the abovesaid step, appropriately mutually displacing the resulting adjacently disposed moderately-widthed ribbons in a direction transversely of their longitudinal direction while said ribbons are being conveyed to thereby establish positional separation of the ribbons from each other;

subjecting the resulting ribbons to a steaming treatment while conveying these ribbons in the state of separation from each other;

threrafter cutting the resulting ribbons into individual noodles while being conveyed; and

drying the resulting individual noodles while being conveyed.

2. A method of manufacturing instantly cookable non-fried dried noodles according to Claim 1, in which:

said starting raw noodle material has a water content of about 30 to about 40% by weight.

3. A method of manufacturing instantly cookable non-fried dried noodles according to Claim 1, in which:

said thickness of the large-widthed web of raw noodle material is about 0.3mm to about 2.0mm.

4. A method of manufacturing instantly cookable non-fried dried noodles according to Claim 1, in which:

said ribbons of raw noodle material each has a width of about 5cm to about 30cm.

5. A method of manufacturing instantly cookable non-fried dried noodles according to Claim 1, in which:

said direction transversely of the longitudinal direction is vertical.

6. A method of manufacturing instantly cookable non-fried dried noodles according to Claim 1, in which:

said direction transversely of the longitudinal direction is horizontal.

7. A method of manufacturing instantly cookable non-fried dried noodles according to Claim 6, in which:

said step of appropriately mutually displacing the adjacently disposed moderately-widthed ribbons is carried out so that they are displaced horizontally until the ribbons are separated from each other at an interval therebetween which is equivalent to at least 5% of the sum of adjacently disposed two moderately-widthed ribbons of raw noodle material.

8. A method of manufacturing instantly cookable non-fried dried noodles according to Claim 1, in which: said moderately-widthed ribbons of raw noodle material are applied with water prior to being subjected to the steaming treatment.

9. A method of manufacturing instantly cookable non-fried dried noodles according to Claim 8, in which: the water applied to said moderately-widthed ribbons of raw noodle material is in an amount of about 100%, at most, of the weight of these ribbons.

10. A method of manufacturing instantly cookable non-fried dried noodles according to Claim 1, in which: said steaming treatment is carried out for about 2 to about 5 minutes with substantially saturated steam at a gauge pressure of about 0.5 to about $1.5 kg/cm^2$.

11. A method of manufacturing instantly cookable non-fried dried noodles according to Claim 1, characterized in that said step of cutting of the ribbons of raw noodle material into individual noodles and said step of drying them are carried out in the following manner:

subjecting the moderately-widthed ribbons of raw noodle material having experienced said steaming treatment to, successively therefrom, a preliminary drying while being conveyed in their mutually separated state to reduce their water content to 15 - 35% by weight;

thereafter cutting the resulting ribbons in their longitudinal direction to provide individual noodles;

then subjecting these noodles to a secondary drying to reduce their water content to 10% by weight at most; and

cutting the resulting individual noodles to an appropriate length.

12. An apparatus for manufacturing instantly cookable dried noodles characterized by, in successive order:

a shaping unit for shaping from a batch of raw noodle material a continuous lengthy large-widthed web of sheet form having a substantially uniform thickness;

a dividing unit having at least one cutting member for dividing the large-widthed web being continuously delivered from said shaping unit into a plurality of moderately-widthed ribbons along the longitudinal direction of said web;

a displacing unit for displacing resulting adjacently disposed moderately-widthed ribbons of raw noodle material to separate them from each other while conveying these ribbons in their longitudinal direction;

a steaming chamber containing, passing therethrough, conveying means for conveying these respective ribbons mounted thereon and also containing therein means for supplying steam;

a preliminary drying chamber provided in a stage subsequent to said steaming chamber and having therethrough endless belt type conveying means and also having therein means for supplying heated dry air;

a secondary drying chamber provided subsequent to said preliminary drying chamber and having therethrough endless belt type conveying means and also having therein means for supplying heated dry air;

a longitudinal cutting unit provided between said preliminary and secondary drying chambers for cutting said ribbons into individual noodles along the longitudinal direction of the ribbons; and

a crosswise cutting unit provided subsequent to said secondary drying chamber for cutting the individual noodles into an appropriate length.

13. An apparatus according to Claim 12, in which: said shaping unit comprises a rolling machine equipped with a plurality of rows, in series, of nipping rollers and with means for driving these rows of nipping rollers in such manner that the rollers in farther subsequent rows are driven at greater surface velocities.

14. An apparatus according to Claim 12, in which: said dividing unit comprises cutting members arranged at intervals of every about 5 to about 30cm.

15. An apparatus according to Claim 12 or 14, in which: said dividing unit comprises a rotatable shaft provided above a path of conveyance of said large-widthed web of raw noodle material transversely, at right angle, of this path, and a disc cutter fixed vertically to said rotatable shaft, there being provided means for driving said rotatable shaft.

16. An apparatus according to Claim 12 or 14, in which: said dividing unit comprises two cutter rollers each alternately having large-diameter portions and small-diameter portions, these two cutter rollers being arranged in a parallel combination so that the large-diameter portions of one of these rollers fit in the small-diameter portions of the other roller to provide stepwise nipping edges, said parallel combination of two cutter rollers being mounted above said path of conveyance of said large-widthed web of raw noodle material transversely, at right angle, of this path,

there being provided means for driving said cutter rollers.

17. An apparatus according to Claim 12, in which:
said displacing unit comprises a pair of upper and lower conveying means for progressively separating said moderately-widthed ribbons of raw noodle material from each other vertically, and for conveying them while maintaining their vertically separated state.

18. An apparatus according to Claim 12, in which:
said displacing unit comprises a plurality of rollers mounted above a path of conveyance of said moderately-widthed ribbons of raw noodle material transversely of this path,
said rollers being arranged so that their axes are progressively greatly downwardly inclined distally from the central line of the group of said ribbons and/or progressively greatly backwardly inclined relative to direction of conveyance of said ribbons.

0086246

- 54 -

19. An apparatus according to Claim 18, in which:
said rollers are tapered rollers.

20. An apparatus according to Claim 18, in which:
the degree of inclination of the axes of said rollers and positional relationship of said rollers and said conveying means are determined so that the mutually adjacently disposed moderately-widthed ribbons of raw noodle material are first separated from each other up to the state in which the separation reaches a degree corresponding to at least 5% of the sum of the widths of adjacently disposed any two of said moderately-widthed ribbons of raw noodle material, and thereafter they are placed on the conveying means.

21. An apparatus according to Claim 12, 17 or 20, in which:
said conveying means is an endless belt type conveyor.

22. An apparatus according to Claim 12, in which:
a water spraying means is provided between said displacing unit and said steaming chamber.

23. Instantly cookable dried noodles manufactured by the method of any one of claims 1 to 11 or by the apparatus of any one of claims 12 to 22.

FIG. 1

FIG. 2

FIG. 3

FIG. 4

FIG. 5

European Patent Office

**EUROPEAN SEARCH REPORT**

Application number

EP 82 10 1135

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | GB-A-2 043 424 (SANYO AKASAKA)<br><br>* Claims 1,3-8; page 3, line 41 - page 5, line 10; examples; figures 1-3 * | 1-3,6 12,23 | A 23 L 1/16<br>A 21 C 11/22<br>A 21 C 11/24 |
| X | US-A-1 779 580 (R. BACCELLIERI)<br>* Claim 1; figures 1,7 * | 15 | |
| X | US-A-1 985 275 (R. BACCELLIERI)<br>* Claim 1; figures 4,5 * | 16 | |
| X | US-A-2 220 438 (C. AMBETTE)<br>* Claim 1; page 2, column 1, line 72 - column 2, line 31; figures 2,4,5 * | 16 | |
| X | FR-A- 996 453 (PRIMO ISTITUTO DIETETICO ITALIANO RINALDO ROSSI)<br>* Abstract 1,2c; figures 1,2 * | 15 | **TECHNICAL FIELDS SEARCHED (Int. Cl. ³)**<br><br>A 23 L 1/00<br>A 21 C 11/00 |
| D,A | US-A-4 243 689 (SADAO KOKEGUCHI et al.)<br>* Claims 1,7; examples * | 1-3,22 | |

The present search report has been drawn up for all claims

| Place of search | Date of completion of the search | Examiner |
|---|---|---|
| THE HAGUE | 13-10-1982 | DESMEDT G.R.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82